# EUROPÄISCHE PATENTANMELDUNG

(11) **EP 3 680 460 A1**
(43) Veröffentlichungstag der Anmeldung: **15.07.2020**
(21) Anmeldenummer: 19151676.4
(22) Anmeldetag: 14.01.2019
(51) Int. Cl.: F01N 3/021

(54) **VERFAHREN UND EINE VORRICHTUNG ZUM VORBELADEN EINES PARTIKELFILTERS EINER BRENNKRAFTMASCHINE SOWIE PARTIKELFILTER**

(71) Anmelder: AVL Tippelmann GmbH, 74196 Neuenstadt am Kocher (DE)
(72) Erfinder: KIELCZYK, Stefan, 74177 Bad Friedrichshall (DE); DRECHSLER, Matthias, 74196 Neuenstadt am Kocher (DE)
(74) Vertreter: Breuer Friedrich Hahner Patentanwälte PartG mbB

(57) **Zusammenfassung**

Die Erfindung betrifft eine Vorrichtung zum Vorbeladen eines Partikelfilters, insbesondere einer Brennkraftmaschine, aufweisend eine Dispergiereinrichtung, welche eingerichtet ist, um Partikel eines Vorbeladungsmaterials in einem Fluid zum Erzeugen einer Dispersion zu dispergieren, sowie eine Pumpeinrichtung, um eine Druckdifferenz zwischen Einlassseite und Auslassseite des Partikelfilters zu erzeugen und eine Durchmischungsstrecke, welche stromabwärts der Dispergiereinrichtung angeordnet ist und mit einem Einlass des Partikelfilters strömungsverbindbar ist.

## Beschreibung

Die Erfindung betrifft ein Verfahren und eine Vorrichtung zum Vorbeladen eines Partikelfilters einer Brennkraftmaschine, insbesondere eines Ottomotors.

Aufgeladene und hochaufgeladene Brennkraftmaschinen, insbesondere Dieselmotoren und Ottomotoren, neigen dazu, Emissionen mit sehr feinen Partikeln im Verbrennungsprozess zu erzeugen. Um die Emission an Partikeln von Kraftfahrzeugen zu beschränken, kommen Partikelfilter zum Einsatz. Diese Partikelfilter bestehen im Allgemeinen aus einem porösen Material wie Keramik mit wechselseitig verschlossenen Kanälen. Das Abgas strömt durch das Material des Partikelfilters und die Partikel (insbesondere Ruß) werden vom Partikelfilter zurückgehalten. Durch die Anlagerung der Partikel an der Oberfläche des Filtersubstrats bzw. durch die Einlagerung in dessen Poren verbessert sich der Abscheidegrad des Filters während einer Einlaufphase.

Es ist eine Aufgabe der Erfindung, ein Verfahren und eine Vorrichtung bereitzustellen, um eine Abscheideleistung eines neu hergestellten Partikelfilters zu verbessern. Eine weitere Aufgabe ist es, einen verbesserten vorbeladenen Partikelfilter bereitzustellen.

Diese Aufgabe wird durch eine Vorrichtung zum Vorbeladen eines Partikelfilters einer Brennkraftmaschine nach Anspruch 1, ein Verfahren zum Vorbeladen eines Partikelfilters einer Brennkraftmaschine nach Anspruch 8 und einen Partikelfilter nach Anspruch 18 gelöst. Vorteilhafte Ausgestaltungen werden in den abhängigen Ansprüchen beansprucht.

Ein erster Aspekt der Erfindung betrifft eine Vorrichtung zum Vorbeladen eines Partikelfilters einer Brennkraftmaschine, insbesondere eines Otto-Partikelfilters aufweisend eine Dispergiereinrichtung, welche eingerichtet ist, um Partikel eines Vorbeladungsmaterials in einem Fluid zum Erzeugen einer Dispersion zu dispergieren, sowie eine Pumpeinrichtung, um eine Druckdifferenz zwischen Einlassseite und Auslassseite des Partikelfilters zu erzeugen; und eine Durchmischungsstrecke, welche stromabwärts der Dispergiereinrichtung angeordnet ist und mit einem Einlass des Partikelfilters strömungsverbindbar ist.

Die Pumpeinrichtung erzeugt eine Druckdifferenz zwischen Einlassseite und Auslassseite des Partikelfilters, um einen Massenstrom des Fluids durch den Partikelfilter zu bewirken.

Ein zweiter Aspekt der Erfindung betrifft ein Verfahren zum Vorbeladen eines neu hergestellten, insbesondere noch keine Partikel enthaltenden, Partikelfilters einer Brennkraftmaschine, insbesondere eines Otto-Partikelfilters, bei welchem Partikel eines Vorbeladungsmaterials in einer Dispersion zusammen mit einem Fluid, insbesondere Luft, mittels einer Druckdifferenz zwischen Einlass und Auslass des Partikelfilters in den Partikelfilter eingebracht werden, wobei die Druckdifferenz so eingestellt wird, dass sich ein Massenstrom des Fluids von größer als etwa 200 kg, bevorzugt größer als etwa 300 kg und am bevorzugtesten größer etwa 400 kg pro Stunde und pro Liter durchströmtem Filtervolumen des Partikelfilters einstellt.

Ein dritter Aspekt der Erfindung betrifft einen Partikelfilter mit Kanälen, welche sich von einer Öffnung auf einer Stirnfläche einer Einlassseite des Partikelfilters in den Partikelfilter hinein erstrecken und jeweils durch einen Boden, welcher der Öffnung gegenüberliegt, abgeschlossen werden, wobei die Kanäle, im Mittel oder alle, ausgehend vom Boden zu weniger als 1/10, insbesondere 1/20, der Länge der Kanäle von der Öffnung bis zum Boden, mit Vorbeladungsmaterial befüllt sind.

Ein Partikelfilter im Sinne der Erfindung ist vorzugsweise ein Filterkörper, in den das Vorbeladungsmaterial eingebracht wird und der dazu vorzugsweise als Einzelteil verfügbar ist. Die Vorbeladung kann jedoch auch an einer Baugruppe erfolgen, die diesen Partikelfilter enthält und normalerweise zum Einbau im Abgasstrang vorgesehen ist und dann im allgemeinen Sprachgebrauch ebenfalls als Partikelfilter bezeichnet wird. Ein Filtersubstrat im Sinne der Erfindung ist vorzugsweise ein Material, aus dem der eigentliche Partikelfilter besteht.

Ein Dispergieren im Sinne der Erfindung ist vorzugsweise ein Erzeugen einer Dispersion.

Eine Druckdifferenz im Sinne der Erfindung ist vorzugsweise ein Unterschied des Drucks zwischen der Einlassseite und der Auslassseite des Partikelfilters, durch den ein Massenstrom durch den Partikelfilter in Gang gesetzt wird.

Ein Differenzdruck im Sinne der Erfindung ist vorzugsweise ein Druckabfall in Strömungsrichtung an dem Partikelfilter, welcher auf dem Strömungswiderstand des Partikelfilters beruht.

Ein Massenstrom im Sinne der Erfindung gibt eine Menge des Fluids als Masse an, die den Filter pro Zeiteinheit und durchströmtem Filtervolumen passiert. Vorzugsweise bezieht sich der Massenstrom auf den Massenstrom, welcher stromaufwärts der Dispergiereinrichtung vorliegt, den Massenstrom, welcher stromabwärts des Partikelfilters vorliegt. Weiter vorzugsweise sind diese Massenströme im Wesentlichen gleich, wobei stromabwärts des Partikelfilters zusätzlich nicht gefilterte Partikel in dem Massenstrom vorliegen können. Da das Vorbeladungsmaterial eine höhere Dichte aufweist als das Fluid, in das es dispergiert wird und die Strömungsgeschwindigkeit bei diesem Vorgang nicht wesentlich beeinflusst wird, ist der Massenstrom der Dispersion (also zwischen der Dispergiereinrichtung und dem Partikelfilter) größer als der Massenstrom des reinen Fluids vor und nach dieser Teilstrecke. Die Messung des Massenstroms erfolgt vorzugsweise am reinen Fluid und entsprechende quantitative Angaben beziehen sich auf diese Messung. Der von der Konzentration des Vorbeladungsmaterials in der Dispersion abhängige Massenstrom der Dispersion ergibt sich entsprechend.

Ein Vorbeladungsmaterial im Sinne der Erfindung ist vorzugsweise ein chemisch inerter Stoff. Weiter vorzugsweise handelt es sich um einen chemisch inerten Stoff, welcher nicht in einem Verbrennungsprozess einer Brennkraftmaschine entstanden ist. Durch die Verwendung eines chemisch inerten Stoffes werden unerwünschte chemische Veränderungen des Filters vermieden und nur die gewünschten physikalischen Effekte herbeigeführt.

Ein Filtervolumen im Sinne der Erfindung bezeichnet vorzugsweise ein Volumen des Filterkörpers und ergibt sich bei den im Allgemeinen üblichen prismatischen Bauformen aus dem Produkt von Grundfläche und Höhe dieses Filterkörpers. Dieses Volumen korreliert mit der effektiven Filterfläche, lässt sich aus den geometrischen Abmessungen jedoch im Allgemeinen leichter bestimmen.

Der Erfindung liegt insbesondere die Erkenntnis zugrunde, dass ein Partikelfilter, insbesondere ein Otto-Partikelfilter, im Neuzustand ohne Ruß- bzw. Aschebeladung eine ungenügende Abscheideleistung aufweist. Erfindungsgemäß wird diese Abscheideleistung verbessert, indem der Partikelfilter im Neuzustand vor der ersten Benutzung mit einem Vorbeladungsmaterial, welches insbesondere chemisch inert und zumindest hinsichtlich der Partikelgröße dem Ruß bzw. Asche ähnlich ist, vorbeladen wird.

Bei der Vorbeladung lagert sich das Vorbeladungsmaterial in den Poren des Partikelfilters an und reduziert dadurch den Porenquerschnitt. Insbesondere lagert sich das Vorbeladungsmaterial an den Mantelflächen von Kanälen bzw. in die Poren des Filtermaterials, das diese Mantelflächen bildet, ein. Auf diese Weise wird die Abscheideleistung bzw. der Abscheidegrad des Partikelfilters im Montagezustand gegenüber dem Neuzustand wesentlich erhöht, in der Weise, dass er vorzugsweise der Abscheideleistung eines infolge einer durch eine Verbrennungskraftmaschine verursachten natürliche Beladung eingelaufenen Partikelfilters im Wesentlichen entspricht.

Durch das erfindungsgemäße Verfahren werden insbesondere die Poren des Partikelfilters mit dem Vorbeladungsmaterial teilweise verschlossen, so dass die Durchlässigkeit des Filtersubstrats auf ein vordefiniertes Maß reduziert wird.

Durch das erfindungsgemäße Verfahren kann insbesondere eine Einlaufphase des Partikelfilters, bis dieser seine nominale oder erforderliche Abscheideleistung erbringt, verkürzt oder sogar ganz überflüssig gemacht werden.

Durch die in Bezug auf das Verfahren angegebenen Werte des Massenstroms wird eine Strömungsgeschwindigkeit erreicht, bei der der Impuls der in der Dispersion transportierten Partikel ausreicht, um diese stabil am Filtersubstrat anzulagern bzw. in dessen Poren einzubetten.

Die genannten Parameter werden vorzugsweise so aufeinander abgestimmt, dass die Vorbeladung vorzugsweise innerhalb von weniger als einer Minute, insbesondere weniger als 30 s erfolgt.

Wird der Filter für eine vorgegebene Dauer mit der Dispersion behandelt, stellt sich eine im Wesentlichen homogene Verteilung des Vorbeladungsmaterials über die Oberfläche des Filtersubstrats ein. Insbesondere steigt in Teilbereichen der durchströmten Filterfläche, die bereits mit Partikeln gesättigt sind, der Strömungswiderstand. Dies führt zu einer intensiveren Durchströmung und somit Partikelablagerung in den bis dahin weniger gesättigten Teilbereichen. Die notwendige Dauer der Durchströmung richtet sich folglich nach dem Massenstrom, der Konzentration der Dispersion, dem Verhältnis von Partikel- und Porengröße, der Partikelgröße selbst sowie der wirksamen Filterfläche.

In einer vorteilhaften Ausgestaltung des erfindungsgemäßen Verfahrens entspricht die Hauptströmungsrichtung durch den Partikelfilter wenigstens im Wesentlichen der Strömungsrichtung im realen Betrieb der Brennkraftmaschine. Das Vorbeladungsmaterial wird von der Einlassseite des Partikelfilters, also der im realen Betrieb der Brennkraftmaschine zugewandten Stirnseite, her in den Partikelfilter eingebracht. Auch hierdurch wird eine weitgehend homogene Verteilung der Partikel des Vorbeladungsmaterials in dem Partikelfilter begünstigt, die weitgehend derjenigen entspricht, die sich als Beladungszustand nach einer realen Einlaufphase ergibt.

In einer weiteren vorteilhaften Ausgestaltung des erfindungsgemäßen Verfahrens wird eine Dauer des Ausbringens der Partikel und/oder ein Durchsatz des Vorbeladungsmaterials so eingestellt, dass der Partikelfilter am Ende des Verfahrens mit etwa 3 g bis etwa 20 g pro Liter Filtervolumen, bevorzugt etwa 10 g bis etwa 15 g pro Liter Filtervolumen, mit dem Vorbeladungsmaterial vorbeladen ist. Hierdurch ergibt sich eine besonders vorteilhafte Abscheideleistung.

In einer weiteren vorteilhaften Ausgestaltung des erfindungsgemäßen Verfahrens wird das Vorbeladungsmaterial vorkonditioniert, insbesondere getrocknet, temperiert und/oder gelockert, so dass dieses eine vordefinierte Feuchte, eine vordefinierte Temperatur und/oder die für die weitere Verarbeitung notwendige Konsistenz aufweist. Hierdurch kann erreicht werden, dass sich die Partikel des Vorbeladungsmaterials gleichmäßig in der Dispersion verteilen. Dadurch wird eine homogene Ablagerung auf dem Filtersubstrat des Partikelfilters begünstigt.

In einer weiteren vorteilhaften Ausgestaltung des erfindungsgemäßen Verfahrens strömt das Vorbeladungsmaterial zusammen mit einem Fluid, insbesondere Luft, infolge einer dazu über dem Filter angelegten Druckdifferenz durch den Partikelfilter, wobei das Fluid die Partikel aus einer abgelagerten Schicht des Vorbeladungsmaterials aufnimmt oder die Partikel dem Fluid mittels einer Dispergiereinrichtung zugemischt werden. Beide Varianten ermöglichen eine gleichmäßige Verteilung des Vorbeladungsmaterials in der Dispersion und somit eine homogene Vorbeladung des Filtersubstrats.

In einer weiteren vorteilhaften Ausgestaltung des erfindungsgemäßen Verfahrens wird ein Vorbeladungszustand des Partikelfilters durch Wiegen des Partikelfilters und Vergleich mit der vor der Vorbeladung ermittelten Masse des Filters oder durch Bestimmen eines Differenzdrucks des Partikelfilters oder durch Bestimmen eines Massenstroms überprüft, wobei vorzugsweise eine Feuchte der Partikel des Vorbeladungsmaterials berücksichtigt wird .

Der Differenzdruck, bzw. Druckabfall über dem Partikelfilter, und der Massenstrom stehen über den Strömungswiderstand des Partikelfilters miteinander vorzugsweise im Zusammenhang.

In einer weiteren vorteilhaften Ausgestaltung wird ein Vorbeladungszustand des Partikelfilters durch Erfassen einer Konzentration des Vorbeladungsmaterials auf der Auslassseite des Filters, insbesondere hinter dem Auslass des Filters, überprüft

Messungen dieser Kenngrößen vor und nach der Vorbeladung erlauben Rückschlüsse auf den Vorbeladungszustand einerseits und auf mögliche Beschädigungen des Partikelfilters andererseits. Durch eine Überprüfung der Vorbeladung kann die Masse an Vorbeladungsmaterial korrigiert und so die Abscheideleistung des Partikelfilters mit hoher Genauigkeit eingestellt werden.

In einer weiteren vorteilhaften Ausgestaltung der Erfindung ist das Vorbeladungsmaterial ein Oxid, insbesondere Magnesiumoxid, und/oder ein Mineral, insbesondere Vulkanasche. Diese Stoffe eignen sich besonders gut zur Vorbeladung, da sie ruß- oder ascheähnliche Eigenschaften aufweisen und gut handhabbar sind.

In einer weiteren vorteilhaften Ausgestaltung des erfindungsgemäßen Verfahrens sind die Partikel des Vorbeladungsmaterials in der Weise ausgebildet, dass diese durch Sorption auf der wirksamen Oberfläche des Filtersubstrats abgelagert oder in dessen Poren eingelagert werden können. Insbesondere kommen hierbei eine Absorption oder eine Adsorption auf dem Filtersubstrat zum Tragen.

In einer weiteren vorteilhaften Ausgestaltung des erfindungsgemäßen Verfahrens wird die Druckdifferenz im Laufe eines Ausbringens der Partikel erhöht, um den bei der Vorbeladung zunehmenden Strömungswiderstand des Partikelfilters und damit einen steigenden Differenzdruck mit zunehmender Vorbeladung des Partikelfilters auszugleichen, insbesondere in der Weise, dass der Massenstrom des Fluids wenigstens im Wesentlichen konstant bleibt. Hierdurch wird eine verminderte Durchlässigkeit des Filters mit zunehmender Vorbeladung ausgeglichen. Insbesondere kann hierbei jener Massenstrom durch den Filter aufrechterhalten werden, welcher sich besonders gut zur homogenen Verteilung der Partikel auf dem Filtersubstrat eignet.

Hierbei macht sich das erfindungsgemäße Verfahren einen Effekt zunutze, dass die Hauptströmung infolge des lokal geringeren Strömungswiderstands in Flächenanteile des Partikelfilters, welche noch nicht vorbeladen sind, ausweicht. Das Erhöhen des Differenzdrucks führt dazu, dass diese freien Flächenanteile des Filtersubstrats besser mit den Partikeln des Vorbeladungsmaterials versorgt werden, so dass deren Durchlässigkeit in der Folge ebenfalls kontinuierlich reduziert wird. Auf diese Weise wird schließlich eine besonders homogene Verteilung der Partikel des Vorbeladungsmaterials über die gesamte wirksame Filterfläche des Partikelfilters erreicht. Indem ein nennenswerter Abfall des Massenstroms unterbunden wird, treffen die Partikel des Vorbeladungsmaterials darüber hinaus auch gegen Ende des Vorbeladens mit einem Impuls auf das Filtersubstrat, der eine hinreichend stabile Anlagerung an der Filterwand bzw. die Einlagerung in deren Poren sicherstellt.

In einer weiteren vorteilhaften Ausgestaltung des erfindungsgemäßen Verfahrens schließt nach oder bei Abschluss des Ausbringens einer vordefinierten Menge, insbesondere Volumen, Masse oder Anzahl an Partikeln, ein Reinigungsprozess der Stirnfläche an einer Einlassseite des Partikelfilters an, bei welchem dort abgelagertes Vorbeladungsmaterial entfernt wird. Beim Einströmen der Dispersion in den Filterkörper werden Partikel auf den Verschlüssen der an der Stirnseite des Einlasses des Filterkörpers verschlossenen Kanälen abgelagert. Es ist vorteilhaft, diese Ablagerungen zu entfernen, um zu verhindern, dass bei weiteren Verarbeitungsschritten unkontrolliert Partikel von dieser Stirnseite abrieseln. Vorzugsweise wird dieser Reinigungsprozess durchgeführt, sobald keine neuen Partikel mehr zugeführt werden, aber der Filter noch von dem Fluid durchströmt wird. Auf diese Weise können die abgelagerten Partikel ebenfalls noch in den Partikelfilter gelangen, so dass sichergestellt ist, dass dieser vollständig mit der festgelegten und entsprechend dosierten Menge an Vorbeladungsmaterial befüllt wird. Vorzugsweise kann der Reinigungsprozess mechanisch, insbesondere durch Bürsten, oder auch durch gezielte Luftströmungen, insbesondere durch Abblasen, erfolgen. Weitere Möglichkeiten für den Reinigungsprozess sind eine gezielte Veränderung der Strömung hinsichtlich Richtung und Geschwindigkeit durch Überfahren der Stirnfläche des Partikelfilters in geringer Entfernung mit einer geeignet geformten Blende.

In einer weiteren vorteilhaften Ausgestaltung des erfindungsgemäßen Verfahrens wird zunächst der Massenstrom des Fluids durch den Filter erzeugt und, sobald dieser stabil ist, werden Partikel in das Fluid dispergiert. Auch diese Maßnahme erhöht die Homogenität der Verteilung der Partikel auf der Filteroberfläche.

In einer weiteren vorteilhaften Ausgestaltung des erfindungsgemäßen Verfahrens werden nach oder bei Abschluss des Ausbringens einer vordefinierten Menge, insbesondere Volumen, Masse oder Anzahl an Partikeln oder eines Erreichens einer definierten Vorbeladung des Partikelfilters keine Partikel mehr in das Fluid dispergiert und der Massenstrom, insbesondere nach einem Reinigungsprozess, über einen vordefinierten Zeitraum aufrecht erhalten. Auf diese Weise wird die Bindung der Partikel im bzw. am Filtersubstrat nochmals verbessert.

In einer weiteren vorteilhaften Ausgestaltung des erfindungsgemäßen Verfahrens wird die Strömung durch den Partikelfilter mittels einer Klappe oder einem Ventil unterbrochen, so dass das Zu- und Abschalten dieser Strömung schnell erfolgen kann während das Gebläse dauerhaft läuft.

Die im Vorhergehenden beschriebenen Merkmale und Vorteile in Bezug auf den ersten Aspekt der Erfindung gelten entsprechend auch für den zweiten Aspekt der Erfindung und umgekehrt.

In einer vorteilhaften Ausgestaltung der erfindungsgemäßen Vorrichtung ist der Partikelfilter in der Vorrichtung in der Weise anordenbar, dass eine Hauptströmungsrichtung in Längsrichtung der Durchmischungsstrecke wenigstens im Wesentlichen senkrecht zu einer Stirnfläche des Partikelfilters, insbesondere wenigstens im Wesentlichen parallel zu Kanälen des Partikelfilters, ausgerichtet ist. Hierdurch wird eine besonders homogene Ablagerung der Partikel des Vorbeladungsmaterials auf der Filteroberfläche erreicht.

In einer weiteren vorteilhaften Ausgestaltung der erfindungsgemäßen Vorrichtung erstreckt die Durchmischungsstrecke sich über eine Länge in Längsrichtung, welche wenigstens doppelt, bevorzugt wenigstens dreifach und am bevorzugtesten wenigstens fünffach so groß ist wie eine, insbesondere mittlere oder maximale, Ausdehnung quer zur Längsrichtung. Hierdurch wird eine besonders gute Durchmischung des Fluids mit dem Vorbeladungsmaterial erreicht.

In einer weiteren vorteilhaften Ausgestaltung der erfindungsgemäßen Vorrichtung weist die Durchmischungsstrecke wenigstens im Wesentlichen denselben Querschnitt wie der Partikelfilter auf. Auch hierdurch wird eine besonders homogene Ablagerung der Partikel des Vorbeladungsmaterials auf der Filteroberfläche erreicht.

In einer weiteren vorteilhaften Ausgestaltung der erfindungsgemäßen Vorrichtung weist diese des Weiteren einen Drucktank, insbesondere Unterdrucktank, auf, in welchem mittels der Pumpeinrichtung, insbesondere Saugeinrichtung, ein Druck, insbesondere Unterdruck, erzeugbar und/oder aufrechterhaltbar ist. Durch den Drucktank können Schwankungen der Druckdifferenz zwischen Einlass und Auslass des Partikelfilters minimiert werden. Vorzugsweise können in dem Drucktank auch Restmengen der Partikel des Vorbeladungsmaterials abgeschieden werden, da dort die Strömung nahezu zum Erliegen kommt.

In einer weiteren vorteilhaften Ausgestaltung der erfindungsgemäßen Vorrichtung kann zusätzlich ein Feinfilter in Strömungsrichtung hinter dem Partikelfilter angeordnet sein, um Partikel auszufiltern, die den Partikelfilter passiert haben. Dies kann notwendig sein, um diese Partikel nicht in die Umgebung gelangen zu lassen (Verschmutzung, Gesundheitsschutz). Sofern in Strömungsrichtung hinter dem Partikelfilter Sensoren, insbesondere zur Massenstrommessung, angeordnet sind, wird der Feinfilter vorzugsweise vor diesen Sensoren angeordnet, um diese vor Verschmutzung zu schützen.

In einer weiteren vorteilhaften Ausgestaltung der erfindungsgemäßen Vorrichtung weist diese eine Leiteinrichtung für das Fluid, insbesondere eine Blaseinrichtung und/oder Düsen, auf, eingerichtet, um die Stirnfläche auf einer Seite des Einlasses des Partikelfilters mittels des Fluids zu reinigen.

Eine Leiteinrichtung im Sinne der Erfindung ist vorzugsweise eingerichtet, um die Strömung des Fluids so zu beeinflussen, dass diese die Oberfläche reinigt, oder selbst als Blaseinrichtung ausgebildet, die direkt auf die Oberfläche gerichtet ist.

In einer weiteren vorteilhaften Ausgestaltung der erfindungsgemäßen Vorrichtung weist die Leiteinrichtung Düsen auf, welche die Blasrichtung definieren, wobei die Düsen in der Weise angeordnet sind, dass das ausgeblasene Fluid schräg auf die Stirnfläche auftrifft.

In einer weiteren vorteilhaften Ausgestaltung der erfindungsgemäßen Vorrichtung weist die Leiteinrichtung Düsen auf, welche die Blasrichtung definieren, wobei die Düsen in der Weise angeordnet sind, dass der Hauptströmung des Fluids ein Drall überlagert wird.

In einer weiteren vorteilhaften Ausgestaltung der erfindungsgemäßen Vorrichtung weist die Leiteinrichtung eine Blende auf oder besteht aus dieser, die die Stirnfläche in geringem Abstand, beispielsweise durch eine Rotation oder Translation überstreicht ohne sie zu berühren. Durch die Blende wird einerseits die durchströmte Fläche reduziert, was zu einer Erhöhung der Strömungsgeschwindigkeit, insbesondere an den Kanten der Blende führt. Andererseits wird die Strömung an der Kanten der Blende umgelenkt, so dass Geschwindigkeitskomponenten parallel zur Stirnfläche auftreten, die die dort abgelagerten Restmengen des Vorbeladungsmaterials mitreißen und so ermöglichen, dass diese in den Partikelfilter eingesaugt werden.

In einer weiteren vorteilhaften Ausgestaltung der erfindungsgemäßen Vorrichtung ergibt die Projektion des Blendenkörpers der Blende auf die Stirnfläche eine konvex umschlossene Fläche, die den Durchmesser der Stirnfläche in einer Richtung komplett oder teilweise, in der dazu senkrechten Richtung nur teilweise überspannt. Vorzugsweise wird hierfür ein Blendenkörper, insbesondere ein Blechstreifen, mit einer Breite von etwa 20% des Partikelfilter-Durchmessers verwendet, der weiter vorzugsweise in etwa 3mm Abstand langsam über diese Stirnfläche bewegt wird.

In einer weiteren vorteilhaften Ausgestaltung der erfindungsgemäßen Vorrichtung weist die Dispergiereinrichtung eine Dosiereinrichtung auf, die eingerichtet ist, um die Menge an Vorbeladungsmaterial bereitzustellen, die bei der Vorbeladung in den Filter einzubringen ist.

In einer weiteren vorteilhaften Ausgestaltung der erfindungsgemäßen Vorrichtung ist die Dispergiereinrichtung als Ejektor, insbesondere in der Art einer Sandstrahlpistole ausgebildet.

In einer weiteren vorteilhaften Ausgestaltung der erfindungsgemäßen Vorrichtung ist ein Strömungsquerschnitt für das Fluid im Bereich der Dispergiereinrichtung vermindert. Hierdurch kann eine höhere Fließgeschwindigkeit erreicht werden, so dass ein höherer statischer Druck und/oder Verwirbelungen entstehen, durch die die Durchmischung der Partikel des Vorbeladungsmaterials mit dem Fluid verbessert wird.

In einer weiteren vorteilhaften Ausgestaltung der erfindungsgemäßen Vorrichtung ist der Partikelfilter während des Vorbefüllens und/oder Reinigens in der Vorrichtung mittels einer Blähmanschette abgedichtet. Dadurch ist ein Ausgleich geometrischer Toleranzen des Filterkörpers möglich und es kann sichergestellt werden, dass kein wesentlicher Zu- oder Abstrom auftritt, der den eingestellten/gemessenen Massestrom bzw. Differenzdruck verfälscht oder dazu führen könnte, dass Vorbeladungsmaterial nicht in den Partikelfilter gelangt

In einer weiteren vorteilhaften Ausgestaltung der erfindungsgemäßen Vorrichtung können Sensoren vorgesehen werden, um Randbedingungen wie Massenstrom, Temperatur, Feuchte o.ä. zu erfassen und zu dokumentieren bzw. den Prozess in Abhängigkeit von diesen Messwerten vorteilhaft zu steuern.

Weitere Merkmale und Vorteile ergeben sich aus der Beschreibung der Figuren. Es zeigen wenigstens teilweise schematisch:
- **Fig. 1**: ein erstes Ausführungsbeispiel einer Vorrichtung zum Vorbeladen eines Partikelfilters;
- **Fig. 2**: ein zweites Ausführungsbeispiel einer Vorrichtung zum Vorbeladen eines Partikelfilters;
- **Fig. 3**: ein drittes Ausführungsbeispiel einer Vorrichtung zum Vorbeladen eines Partikelfilters;
- **Fig. 4**: ein viertes Ausführungsbeispiel einer Vorrichtung zum Vorbeladen eines Partikelfilters;
- **Fig. 5**: ein Ausführungsbeispiel eines Verfahrens zum Vorbeladen eines Partikelfilters;
- **Fig. 6**: ein erstes Ausführungsbeispiel einer Leiteinrichtung für die Vorrichtung zum Vorbeladen eines Partikelfilters;
- **Fig. 7**: ein zweites Ausführungsbeispiel einer Leiteinrichtung für die Vorrichtung zum Vorbeladen eines Partikelfilters;
- **Fig. 8**: ein drittes Ausführungsbeispiel einer Leiteinrichtung für die Vorrichtungen zum Vorbeladen eines Partikelfilters; und
- **Fig. 9**: ein viertes Ausführungsbeispiel einer Leiteinrichtung für die Vorrichtungen zum Vorbeladen eines Partikelfilters.

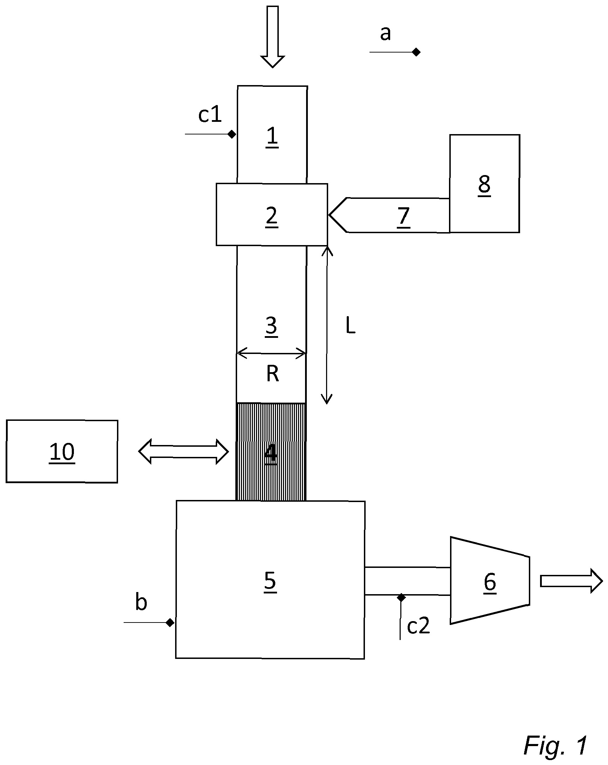

**Fig. 1** zeigt ein erstes Ausführungsbeispiel einer Vorrichtung zum Vorbeladen eines Partikelfilters 4.

Fluid aus einer Atmosphäre, insbesondere Umgebungsluft, wird mittels einer Pumpeinrichtung 6 durch die Vorrichtung gesaugt. Die Pumpleistung der Pumpeinrichtung 6 wird hierbei geregelt, insbesondere über einen Sensor a zur Ermittlung des statischen Umgebungsdrucks, einen Sensors b zur Ermittlung eines statischen Unterdrucks, und einen Sensors c1 oder c2 zur Ermittlung eines Durchsatzes, insbesondere eines Massenstroms oder Volumenstroms.

Die Umgebungsluft wird vorzugsweise über eine Beruhigungsstrecke 1 zur Strömungsberuhigung in eine Dispergiereinrichtung 2, welche zur Gemischaufbereitung dient, gesaugt. In der Dispergiereinrichtung 2 wird insbesondere eine Dispersion aus der Umgebungsluft und dem Vorbeladungsmaterial, welches zur Vorbeladung des Partikelfilters 4 dient, erzeugt.

Wie in Fig. 1 dargestellt, ist die Dispergiereinrichtung 2 hierfür vorzugsweise mit einer Dosiereinrichtung 7 verbunden. Weiter vorzugsweise ist die Dosiereinrichtung 7 ein Bestandteil der Dispergiereinrichtung 2. Die Dosiereinrichtung 7 entnimmt das Vorbeladungsmaterial aus einem Silo 8 und führt es in definierter Menge in die Dispergiereinrichtung 2 zu. Die Dosiereinrichtung gibt das Vorbeladungsmaterial vorzugsweise unmittelbar in den Massenstrom des Fluids ab.

Vorzugsweise wird die erzeugte Dispersion über eine Durchmischungsstrecke 3 in den Partikelfilter 4 eingesaugt.

Die Durchmischungsstrecke 3 dient zur Durchmischung, insbesondere zur Homogenisierung, der Dispersion, dies bedeutet zur Erzeugung einer möglichst gleichmäßigen Verteilung der Partikel im Fluid. Die Durchmischungsstrecke 3 erstreckt sich über eine Länge L in Längsrichtung. Die Länge L ist vorteilhaft mindestens doppelt, vorteilhaft mindestens dreifach, besonders vorteilhaft mindestens fünffach so groß wie die Ausdehnung R quer zur Längsrichtung. Die Längsrichtung liegt bevorzugt unter einem Winkel von höchstens 10°, besonders bevorzugt höchstens 5°, am bevorzugtesten parallel zu einer Längsachse der Kanäle des Partikelfilters 4. In der Durchmischungsstrecke 3 wird der Dispersion eine Hauptströmungsrichtung vorgegeben, die vorteilhaft im Wesentlichen parallel zur Längsachse der Kanäle verläuft. Es kann zweckmäßig sein, im Querschnitt der Durchmischungsstrecke 3 Strömungsleitelemente 9 (nicht dargestellt) vorzusehen.

Vorteilhaft entspricht der Querschnitt der Durchmischungsstrecke an dem Partikelfilter zugewandten Ende dem Querschnitt der Stirnfläche 13 des Partikelfilters 4. Auf diese Weise wird der gesamte Querschnitt des Partikelfilters 4, also alle Kanäle, gleichzeitig mit Dispersion beaufschlagt. Durch die vorgelagerte Durchmischungsstrecke 3 werden alle Kanäle homogen mit Dispersion beaufschlagt, sodass sich schließlich in allen Kanälen eine weitgehend homogene Verteilung an Vorbeladungsmaterial einstellt.

Die Dispersion wird aufgrund der Druckdifferenz in bzw. durch das Filtersubstrat geleitet. Die Dispersion strömt bevorzugt durch diejenigen Kanäle des Partikelfilters, deren Poren noch nicht ausreichend mit Vorbeladungsmaterial beladen sind. Sobald die Poren eines Kanals ausreichend geschlossen sind, erfolgt kein bzw. kein signifikanter Eintrag von Vorbeladungsmaterial mehr. Eine übermäßige Ablagerung von Vorbeladungsmaterial am Boden der Kanäle wird dadurch im Wesentlichen vermieden.

Das Vorbeladungsmaterial wird auf diese Weise bedarfsgerecht in die Kanäle eingebracht, ein Überschuss an Vorbeladungsmaterial im dem Kanälen wird dadurch weitgehend vermieden. Überschüssiges Vorbeladungsmaterial neigt zum Herausfallen aus dem Partikelfilter 4, zudem bringt es keine verbesserte Filtereffizienz, sodass die Erfindung sowohl aus wirtschaftlicher Sicht als auch hinsichtlich einer Verunreinigung durch Partikel vorteilhaft ist.

Der Boden des Kanals liegt der Öffnung des Kanals gegenüber. Zwischen Boden und Öffnung ist am Umfang die Filterfläche des Kanals ausgebildet, welche die Poren aufweist. Eine übermäßige Ablagerung bezeichnet eine Füllung des Kanals mit Vorbeladungsmaterial von mehr als 1/10, insbesondere 1/20 der Länge des Kanals, gemessen ab dem Boden des Kanals.

Durch die Ablagerung am Boden wird die effektive Filterfläche des Kanals in der Länge reduziert, sodass eine Ablagerung am Boden vorzugsweise zu minimieren ist.

Um eine gleichmäßige Druckdifferenz gegenüber dem Umgebungsdruck zu erzeugen, stellt der vorzugsweise vorhandene Unterdrucktank 5 ein Volumen bereit, um mögliche Druckschwankungen auszugleichen. Auch kommt in dem Unterdrucktank 5 eine Strömung im Wesentlichen zum Erliegen, so dass mögliche Restpartikel des Vorbeladungsmaterials aus des Fluids abgeschieden werden können, bevor das Fluid durch die Pumpeinrichtung 6 in die Umgebung strömt.

Stromabwärts des Partikelfilters 4 ist vorzugsweise eine Filtereinrichtung (nicht dargestellt) vorgesehen, welche die Partikel des Vorbeladungsmaterials, die die Filterfläche des Partikelfilters passiert haben, aus der an die Umgebung abzugebenden Luft abscheidet.

Eine Waage 10 dient, wie in Bezug auf das erfindungsgemäße Verfahren 100 beschrieben, zur Überprüfung der Vorbeladung des Partikelfilters 4.

Der Strömungsweg des Fluids durch die Vorrichtung ist vorzugsweise dicht, insbesondere gegenüber einer angelegten Druckdifferenz, abgeschlossen.

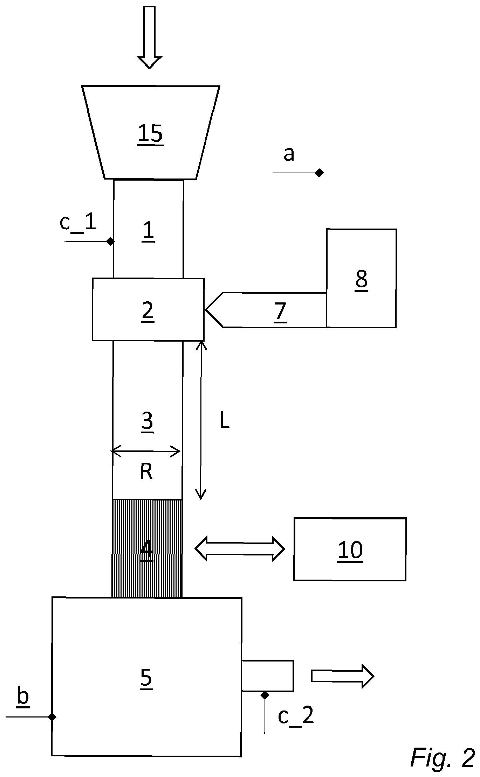

**Fig. 2** zeigt ein zweites Ausführungsbeispiel der erfindungsgemäßen Vorrichtung zum Vorbeladen eines Partikelfilters 4. Das zweite Ausführungsbeispiel unterscheidet sich von dem ersten Ausführungsbeispiel nach Fig. 1 im Wesentlichen dadurch, dass mittels der Pumpeinrichtung 15 statt eines Unterdrucks stromabwärts des Partikelfilters 4 ein Überdruck vor dem Partikelfilter 4 erzeugt und so die Durchströmung des Partikelfilter 4 erreicht wird. Dazu wird eine Blaseinrichtung 15 vor der Beruhigungsstrecke 1 angeordnet.

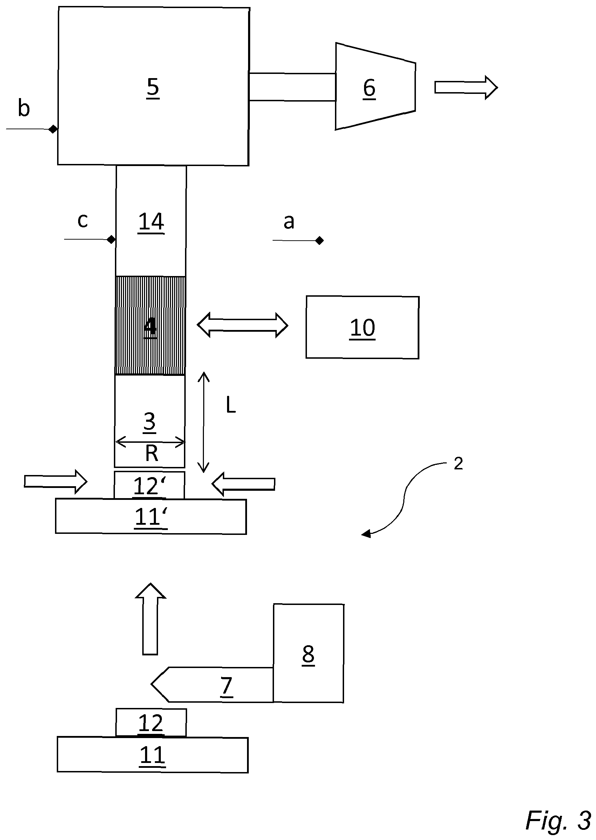

**Fig. 3** zeigt ein drittes Ausführungsbeispiel der Vorrichtung zum Vorbeladen eines Partikelfilters 4.

Dieses Ausführungsbeispiel unterscheidet sich von dem ersten und dem zweiten Ausführungsbeispiel gemäß der Figuren 1 und 2 im Wesentlichen dadurch, dass die Dispergiereinrichtung 2 eine Trägerplatte 11 aufweist. Statt eines Ausbringens in einem Massenstrom wird das Vorbeladungsmaterial 12' in diesem Ausführungsbeispiel über eine optionale Durchmischungsstrecke 3 von einer Trägerplatte 11' direkt in den Filter 4 gesaugt.

Aus dem Silo 8 wird mittels der Dosiereinrichtung 7 Vorbeladungsmaterial 12 zunächst auf die Trägerplatte aufgebracht. Danach wird die Trägerplatte 11 vor einer optionalen Durchmischungsstrecke 3 bzw. direkt vor dem der Einlassseite des Partikelfilters 4 platziert. Dies ist in der Fig. 3 durch die Trägerplatte 11' mit den Partikeln 12' angedeutet. Von hier werden die Partikel 12' zusammen mit angesaugter Umgebungsluft in bzw. durch den Filter 4 gesaugt. Vorzugsweise ist hierbei zwischen einem optionalen Unterdrucktank 5 und dem Partikelfilter 4 eine weitere Saugstrecke 14 angeordnet, in der der Massen- bzw. Volumenstrom mittels eines Sensors c erfasst werden kann.

Die Dispersion wird in diesem Ausführungsbeispiel also durch das Aufsaugen von der Trägerplatte 11 erzeugt. Um das vollständige Einsaugen des Vorbeladungsmaterials zu begünstigen, kann vorzugsweise eine Relativbewegung zwischen Trägerplatte und Durchmischungsstrecke 3 und/oder dem Partikelfilter 4 vorgesehen sein.

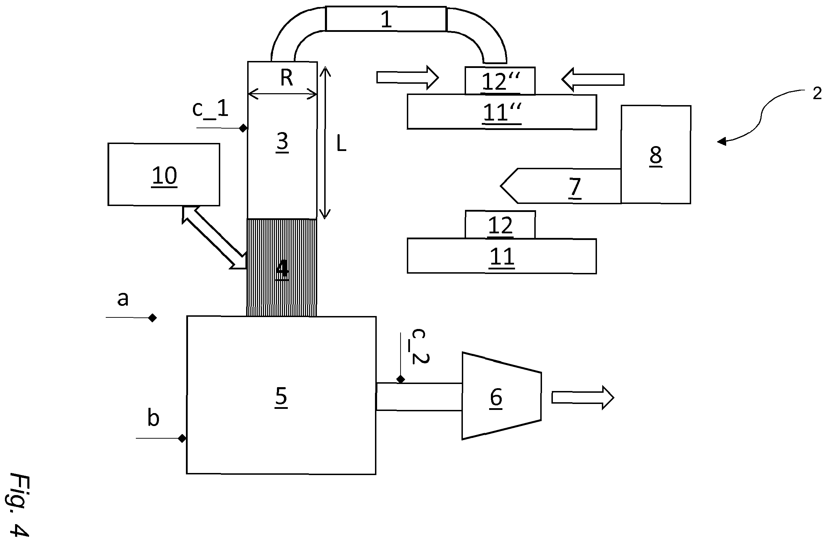

**Fig. 4** zeigt ein viertes Ausführungsbeispiel der Vorrichtung zum Vorbeladen eines Partikelfilters 4.

Im Unterschied zum dritten Ausführungseispiel nach Fig. 3 werden die Partikel 12" über eine Ansaugstrecke 1 in die Durchmischungsstrecke 3 gesaugt, bevor sie zusammen mit der Umgebungsluft als Dispersion in den Partikelfilter 4 eintreten. Die Ansaugstrecke 1 dient hierbei als eine Art Krümmer und erzeugt Turbulenzen in der Strömung, welche zu einer verbesserten Herstellung der Dispersion zwischen den Partikeln 12' und der Umgebungsluft führen. Um sicherzustellen, dass das Vorbeladungsmaterial vollständig aufgesaugt wird, kann auch in diesem Ausführungsbeispiel eine Relativbewegung zwischen Trägerplatte und Ansaugstrecke erzeugt werden.

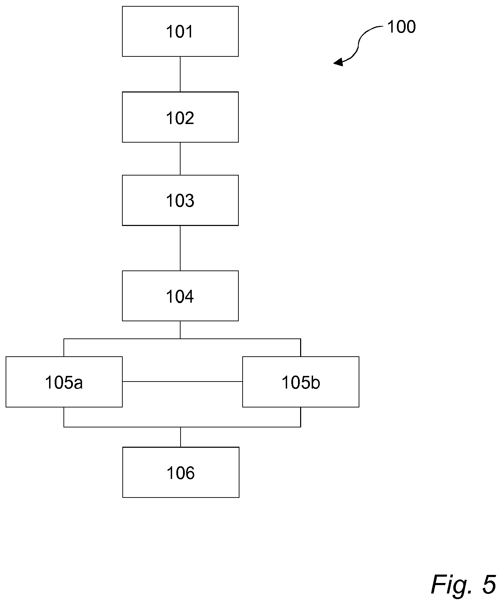

**Fig. 5** zeigt ein Ausführungsbeispiel eines erfindungsgemäßen Verfahrens 100 zum Vorbeladen eines Partikelfilters 4.

In einem ersten Arbeitsschritt 101 wird das Vorbeladungsmaterial vorzugsweise konditioniert. Hierfür wird das Vorbeladungsmaterial insbesondere getrocknet, temperiert und/oder gelockert, um eine vordefinierte Feuchte, eine vordefinierte Temperatur und/oder die für die weitere Verarbeitung notwendige Konsistenz zu gewährleisten.

In einem mittelbar oder unmittelbar auf den ersten Arbeitsschritt folgenden zweiten Arbeitsschritt 102 wird eine Dispersion aus den Partikeln des Vorbeladungsmaterials und einem Fluid, insbesondere einer gasförmigen Atmosphäre, insbesondere Luft, erzeugt. Bei dem dritten und dem vierten Ausführungsbeispiel der Vorrichtung zum Vorbeladen nach den Figuren 4 und 5 wird die Dispersion vorzugsweise durch Aufsaugen des Vorbeladungsmaterials 12 von einer Trägerplatte 11 erzeugt.

Bei dem ersten und dem zweiten Ausführungsbeispiel der erfindungsgemäßen Vorrichtung nach den Figuren 2 und 3 wird die Dispersion vorzugsweise erzeugt, indem das Vorbeladungsmaterial kontrolliert in den Fluidstrom eingebracht wird. Dies kann durch direktes Einfördern oder Einblasen, gegebenenfalls unter Nutzung eines statischen Drucks in der Strömung des Fluids, geschehen. Alternativ vorzugsweise wird die Dispersion durch Zumischen einer höher konzentrierten Dispersion erzeugt, die mechanisch oder pneumatisch in einer geeigneten Vorrichtung erzeugt wird.

Bei dem dritten und vierten Ausführungsbeispiel wird die Dispersion durch Einbringen einer Trägervorrichtung 11, 11' bzw. einer Lochplatte oder eines Trägersiebs in den Luftstrom erzeugt, so dass das Vorbeladungsmaterial 12, 12' von einer Strömung mitgerissen wird. Dies kann vorzugsweise durch eine Vibration der Trägervorrichtung 11,11' unterstützt werden.

Weiter vorzugsweise wird im ersten und zweiten Ausführungsbeispiel ein Ejektor in den Luftstrom eingebracht, mit dem das Vorbeladungsmaterial pneumatisch (wie bei einer Sandstrahlvorrichtung) in den Luftstrom gemischt wird.

Weiter vorzugsweise wird im ersten und zweiten Ausführungsbeispiel ein Behälter in den Luftstrom eingebracht, aus dem das Vorbeladungsmaterial mechanisch, z. B. durch Rotation des Behälters oder einer Scheibe oder pneumatisch durch Luftdüsen im oder am Behälter, welche das Vorbeladungsmaterial ausblasen, in den Luftstrom gemischt wird.

In einem mittelbar oder unmittelbar auf den zweiten Arbeitsschritt 102 folgenden dritten Arbeitsschritt 103 wird die Dispersion in den Partikelfilter 4 eingebracht. Die Einlassseite und die Auslassseite des Partikelfilters 4 sind durch die Poren des Partikelfilters 4 fluidkommunizierend miteinander verbunden. Insbesondere sind die Einlassseite und die Auslassseite des Partikelfilters 4 ausschließlich durch das Filtersubstrat mittels der Poren miteinander verbunden, sodass sichergestellt ist, dass die Dispersion nicht anderweitig, undefiniert zwischen Einlass- und Auslassseite strömt. Die Dispersion trennt sich zumindest teilweise in und/oder an der wirksamen Filterfläche auf. Die Partikel des Vorbeladungsmaterials werden zumindest teilweise in und/oder an der wirksamen Filterfläche zurückgehalten. Das Fluid tritt an der Auslassseite des Partikelfilters 4 wieder aus.

In dem Partikelfilter 4 lagern sich die Partikel auf der wirksamen Filterfläche des neu hergestellten, d. h. ohne Rußbeladung vorhandenen Filtersubstrats des Partikelfilters ab, bzw. werden in dessen Poren eingelagert.

Vorzugsweise wird die Durchströmung des Filters mit Fluid erreicht, indem die erfindungsgemäße Vorrichtung eine Druckdifferenz zwischen dem Einlass und dem Auslass des Partikelfilters 4 erzeugt. Weiter vorzugsweise wird die Druckdifferenz dabei in der Weise eingestellt, dass eine Hauptströmung durch den Partikelfilter 4 wenigstens im Wesentlichen der Strömung im realen Betrieb der Brennkraftmaschine entspricht. Weiter vorzugsweise wird die Dispersion solange in den Partikelfilter 4 eingeströmt, bis ein gewünschter Ablagerungsgrad der Partikel im Partikelfilter 4 erreicht ist. Der gewünschte Ablagerungsgrad entspricht vorzugsweise einem Zustand, in dem die gesamte wirksame Filterfläche homogen mit Vorbeladungsmaterial beladen ist.

Vorzugsweise werden zumindest 90 Prozent, insbesondere 95 Prozent, insbesondere der gesamte Querschnitt, des Einlasses des Partikelfilters mit Dispersion angeströmt. Vorzugsweise werden zumindest 90 Prozent, insbesondere 95 Prozent, insbesondere der gesamte Querschnitt, des Einlass des Partikelfilters gleichzeitig mit Dispersion angeströmt.

In einem unmittelbar oder mittelbar auf den dritten Arbeitsschritt 103 folgenden oder parallel erfolgenden vierten Arbeitsschritt 104 wird die Druckdifferenz im Laufe eines Ausbringens der Partikel, insbesondere in Form einer Dispersion vor dem Einlass des Partikelfilters 4, erhöht, um einen sinkenden Massenstrom, welcher an dem Partikelfilter 4 mit zunehmender Vorbeladung, die zu einem steigenden Strömungswiderstand und damit Differenzdruck führt, auszugleichen. Vorzugsweise wird die Druckdifferenz dabei so erhöht, dass der Durchsatz des Fluids oder der Dispersion konstant bleibt.

In einem unmittelbar oder mittelbar auf den vierten Arbeitsschritt 104 folgenden oder parallel erfolgenden fünften Arbeitsschritt 105a wird der Vorbeladungszustand des Partikelfilters 4 durch Wiegen desselbigen und Vergleich mit der im Neuzustand ermittelten Masse des Partikelfilters überprüft. Vorzugsweise wird hierbei eine Feuchte der Partikel des Vorbeladungsmaterials berücksichtigt, um die exakte Menge der eingelagerten Partikel bestimmen zu können. Alternativ oder zusätzlich wird der Vorbeladungszustand durch Erfassen eines Massenstroms oder Durchsatzes oder des Differenzdrucks vor und nach der Vorbeladung und/oder der Partikelkonzentration hinter dem Auslass des Partikelfilters 4 überprüft, 105b.

Vorzugsweise wird die Dauer eines Ausbringens des Vorbeladungsmaterials in der Weise eingestellt, dass der Partikelfilter nach Abschluss des Verfahrens 100 mit einer definierten Menge Vorbeladungsmaterial beladen ist. Vorteilhaft beträgt die definierte Menge etwa 3 g bis etwa 20 g Trockengewicht pro Liter Filtervolumen, bevorzugt etwa 10 g bis etwa 15 g Trockengewicht pro Liter Filtervolumen,

In einem unmittelbar oder mittelbar auf den dritten Arbeitsschritt 103 folgenden oder parallel erfolgenden sechsten Arbeitsschritt 106 wird die Stirnfläche 13 auf der Seite des Einlasses des Partikelfilters 4 nach und/oder während des Ausbringens der Partikel mittels eines Reinigungsprozesses gereinigt.

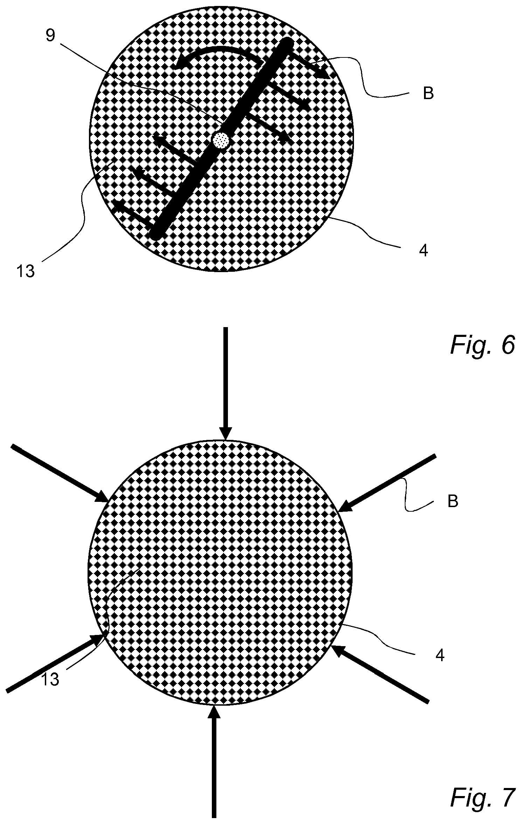

Da Partikelfilter oftmals aus parallel zueinander angeordneten Kanälen bzw. Röhrchen bestehen, welche jeweils abwechselnd an einem Ende verschlossen sind, ergibt sich im Allgemeinen eine Stirnfläche 13 auf der Einlassseite eines Partikelfilters 4, wie sie in den **Figuren 6, 7** **und** **8** schematisch dargestellt ist.

Die dunklen Quadrate stellen hierbei jeweils geschlossene Kanäle dar, die hellen Quadrate offene Kanäle, wobei die Darstellung sowohl hinsichtlich der genauen Gestalt der Stirnfläche 13 als auch der Querschnittsflächen der Kanäle wenigstens teilweise schematisch ist.

Der Umfang der Kanäle bildet die Filterfläche. Bei dem Anströmen der Einlassseite des Partikelfilters 4 tritt die Dispersion in die offenen Kanäle ein und gelangt von dort aus über die Filterfläche auf die Auslassseite des Partikelfilters 4, wobei sich zumindest ein Teil der Partikel des Vorbeladungsmaterials an und/oder in der Filterfläche festsetzen. Beim Anströmen der Stirnfläche 13 des Partikelfilters 4 lagern sich insbesondere auch auf den an der Stirnfläche 13 verschlossenen Kanälen des Partikelfilters 4 Partikel des Vorbeladungsmaterials ab.

Diese Partikel können durch einen Reinigungsprozess in Arbeitsschritt 106 nach und/oder während des Ausbringens der Partikel entfernt werden und werden vorzugsweise hierdurch auch noch dem Partikelfilter 4 zugeführt, so dass sie zu dessen Vorbeladung beitragen.

Der Reinigungsprozess kann mechanisch, z. B. durch Bürsten, erfolgen, oder durch Überlagerung eines Dralls in die bestehende Hauptströmung des Fluids, oder auch durch ein Abblasen.

In **Fig. 6** ist ein gezielter Reinigungsprozess mittels eines ersten Ausführungebeispiels der Leiteinrichtung 9 dargestellt, welche Düsen aufweist, die schräg zur Stirnfläche 13 des Partikelfilters 4 orientiert sind. Vorzugsweise ist die Leiteinrichtung 9 in diesem Fall ein rotierendes T-Rohr, welches mittels einer gesonderten Blaseinrichtung 15 mit dem Fluid beaufschlagt wird.

Alternativ können die Düsen, wie im zweiten Ausführungsbeispiel einer Leiteinrichtung in **Fig. 7** gezeigt, am Umfang einer Durchmischungsstrecke 3 benachbart zur Stirnfläche 13 des Partikelfilters 4 angeordnet sein. Vorzugsweise sind die Düsen schräg, insbesondere in einem Winkel von weniger als 60°, insbesondere weniger als 45° zu der Stirnfläche 13, durch die das Fluid eingeblasen wird, orientiert. Gegebenenfalls können die Düsen nacheinander mit Fluid beaufschlagt werden und der Vorgang beliebig oft wiederholt werden.

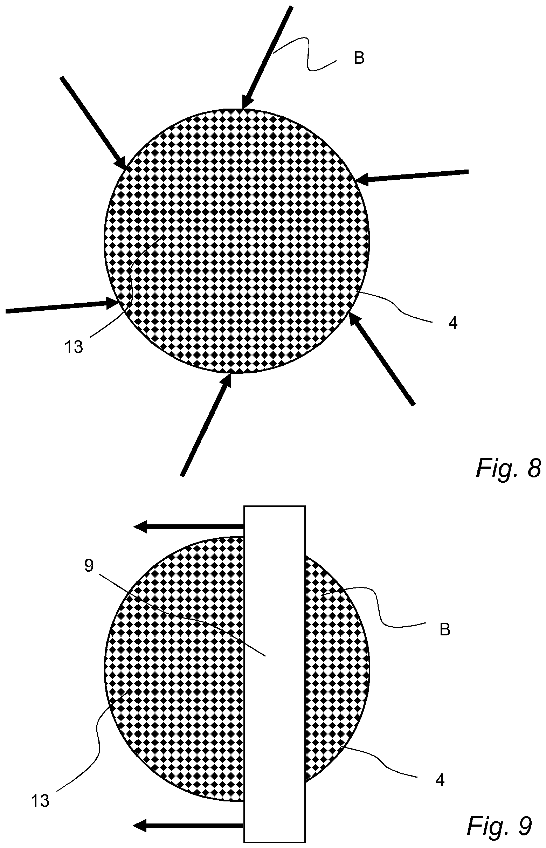

In einem dritten Ausführungsbeispiel der Lenkeinrichtung kann das Fluid, wie in Fig. 8 dargestellt, über nicht radial angeordnete Düsen am Umfang der Durchmischungsstrecke 3 benachbart zur Stirnfläche 13 des Partikelfilters 4 schräg, insbesondere in einem Winkel von weniger als 60°, insbesondere weniger als 45°, oder parallel zur Stirnfläche 13 eingeblasen werden. Vorzugsweise kann auch hier durch alle Düsen gleichzeitig eingeblasen werden oder nacheinander. Des Weiteren kann die Blasrichtung B direkt auf die Stirnfläche 13 oder in der Weise gerichtet sein, dass in einer im Wesentlichen senkrecht zur Stirnfläche 13 orientierten Hauptströmung des Fluids eine Drallkomponente erzeugt bzw. dieser Hauptströmung überlagert wird. Die Hauptströmung ist hierbei vorzugsweise jene Strömung, welche der im Wesentlichen vorherrschenden Strömungsrichtung folgt.

Das dritte Ausführungsbeispiel der Lenkeinrichtung in Fig. 8 kann vorteilhaft auch während des dritten Arbeitsschrittes 103 genutzt werden, d.h. wenn mit der Hauptströmung noch Vorbeladungsmaterial transportiert wird. Hierdurch können Ablagerungen auf den geschlossenen Kanälen von vornherein reduziert werden.

In einem vierten Ausführungsbeispiel weist die Lenkeinrichtung, wie in **Fig. 9** dargestellt, eine Blende 9 auf, die den Durchmesser der Stirnfläche in einer Richtung komplett oder teilweise, in der dazu senkrechten Richtung nur teilweise überspannt. Vorzugsweise wird hierfür ein Blendenkörper mit einer Breite von etwa 20% des Partikelfilter-Durchmessers verwendet, der in geringem Abstand langsam über diese Stirnfläche bewegt wird, wobei die Strömung insbesondere an den Kanten der Blende beschleunigt und so umgelenkt wird, dass Restmengen des Vorbeladungsmaterials auf der Stirnfläche in den Partikelfilter eingesaugt werden. Dies erfolgt vorteilhaft während des dritten Arbeitsschrittes 103.

Das zweite und das dritte Ausführungsbeispiele der Leiteinrichtung können bei einer Vorrichtung gemäß dem zweiten Ausführungsbeispiel (Fig. 2), dritten Ausführungsbeispiel (Fig. 3) oder vierten Ausführungsbeispiel (Fig. 4) auch ohne zusätzliches Gebläse für die Düsen realisiert werden. Hierfür wird die Düse vorzugsweise innerhalb der Durchmischungsstrecke 3 angeordnet und die Hauptströmung zur Versorgung der Düsen verwendet. indem bei gleichbleibendem lokalen Druck die Hauptströmung durch Vergrößerung des Strömungswiderstandes in der dem Partikelfilter 4 vorgelagerten Durchmischungsstrecke 3 reduziert wird. Vorzugsweise werden während des Verfahrens 100 Parameter wie Differenzdruck und Massenstrom erfasst. Insbesondere wird zumindest einer dieser Messwerte weiterverarbeitet, um den Zustand des Partikelfilters 4 zu überwachen, insbesondere hinsichtlich einer Filterbeschädigung.

Vorzugsweise wird die Druckdifferenz in der Weise gewählt, dass sich ein Massenstrom des Fluids von größer als etwa 200 kg, bevorzugt größer als etwa 300 kg und am bevorzugtesten größer etwa 400 kg pro Stunde und pro Liter durchströmtem Filtervolumen des Partikelfilters 4 einstellt.

Weiter vorzugsweise zeichnen sich die Partikel des Vorbeladungsmaterials durch eine hohe Neigung zur Anhaftung an Oberflächen aus. Vorzugsweise wird das Verfahren 100 vorzugsweise bei 19°C bis 21°C, insbesondere bei 20°C ausgeführt. Hierdurch haften die Partikel besonders gut an Oberflächen.

Es sei darauf hingewiesen, dass es sich bei den Ausführungsbeispielen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt. Insbesondere kann die Reihenfolge der Arbeitsschritte des Verfahrens 100 variiert werden und die einzelnen Merkmale der Ausführungsbeispiele der Vorrichtung können miteinander kombiniert werden. Die in den Figuren schematisch dargestellten Vorrichtungsvarianten berücksichtigen auch die Möglichkeit der Automatisierung, bei der der Partikelfilter der Vorrichtung manuell oder durch eine andere geeignet Vorrichtung an definierten Übergabestellen, beispielsweise direkt auf die Waage, zugeführt und auch wieder entnommen wird. Neben der Dosierung des Vorbeladungsmaterial, welches wie dargestellt in einem Vorratssilo gelagert wird, erfolgt dann auch der Transport innerhalb der Vorrichtung zwischen Übergabestelle, Waage und Vorbeladungsposition automatisiert.

**Bezugszeichenliste**

| | |
|---|---|
| Beruhigungsstrecke | 1 |
| Dispergiereinrichtung | 2 |
| Durchmischungsstrecke | 3 |
| Partikelfilter | 4 |
| Drucktank | 5 |
| Saugeinrichtung | 6 |
| Dosierungseinrichtung | 7 |
| Silo | 8 |
| Leiteinrichtung | 9 |
| Waage | 10 |
| Trägervorrichtung | 11, 11' |
| Vorbeladungsmaterial | 12, 12' |
| Stirnfläche des Partikelfilters auf der Einlassseite | 13 |
| Saugstrecke | 14 |
| Blaseinrichtung | 15 |
| Sensor zur Ermittlung des statischen Umgebungsdrucks | a |
| Sensor zur Ermittlung eines statischen Unter- bzw. Überdrucks | b |
| Sensors zur Ermittlung eines Durchsatzes | c, c1, c2 |
| Blasrichtung | B |
| Länge | L |
| Ausdehnung | R |

## Patentansprüche

1. Vorrichtung zum Vorbeladen eines Partikelfilters (4), insbesondere einer Brennkraftmaschine, aufweisend
eine Dispergiereinrichtung (2), welche eingerichtet ist, um Partikel eines Vorbeladungsmaterials in einem Fluid zum Erzeugen einer Dispersion zu dispergieren,
eine Pumpeinrichtung (6, 15), um eine Druckdifferenz zwischen Einlassseite und Auslassseite des Partikelfilters (4) zu erzeugen, und
eine Durchmischungsstrecke (3), welche stromabwärts der Dispergiereinrichtung (2) angeordnet ist und mit einem Einlass des Partikelfilters (4) strömungsverbindbar ist.

2. Vorrichtung nach Anspruch 1, wobei der Partikelfilter (4) in der Vorrichtung in der Weise anordenbar ist, dass eine Hauptströmungsrichtung in Längsrichtung der Durchmischungsstrecke wenigstens im Wesentlichen senkrecht zu einer Stirnfläche (13) des Partikelfilters (4), insbesondere wenigstens im Wesentlichen parallel zu Kanälen des Partikelfilters (4), ausgerichtet ist.

3. Vorrichtung nach Anspruch 1 oder 2, wobei die Durchmischungsstrecke (3) sich über eine Länge (L) in Längsrichtung erstreckt, welche wenigstens doppelt, bevorzugt wenigstens dreifach und am bevorzugtesten wenigstens fünffach so groß ist wie eine, insbesondere mittlere oder maximale, Ausdehnung (R) quer zur Längsrichtung.

4. Vorrichtung nach einem der vorhergehenden Ansprüche, wobei die Durchmischungsstrecke (3) wenigstens im Wesentlichen denselben Querschnitt wie der Partikelfilter (4) aufweist.

5. Vorrichtung nach einem der vorhergehenden Ansprüche, des Weiteren einen Drucktank (5) aufweisend, in welchem mittels der Pumpeinrichtung (6) ein Druck erzeugbar und/oder aufrechterhaltbar ist.

6. Vorrichtung nach einem der vorhergehenden Ansprüche, wobei die Dispergiereinrichtung (2) eine Dosiereinrichtung (8) aufweist, die eingerichtet ist, um die für die Vorbeladung benötigte Menge des Vorbeladungsmaterials bereitzustellen.

7. Vorrichtung nach einem der vorhergehenden Ansprüche, wobei ein Strömungsquerschnitt im Bereich der Dispergiereinrichtung (2) vermindert ist.

8. Verfahren (100) zum Vorbeladen eines Partikelfilters (4), insbesondere einer Brennkraftmaschine, vorzugsweise mittels einer Vorrichtung nach einem der Ansprüche 1 bis 7, bei welchem Partikel eines Vorbeladungsmaterials in einer Dispersion zusammen mit einem Fluid, insbesondere Luft, mittels einer Druckdifferenz zwischen Einlass und Auslass des Partikelfilters (4) in den Partikelfilter (4) eingebracht werden (103), wobei die Druckdifferenz in der Weise gewählt wird, dass sich ein Massenstrom des Fluids von größer als etwa 200 kg, bevorzugt größer als etwa 300 kg und am bevorzugtesten größer etwa 400 kg pro Stunde und pro Liter durchströmtem Filtervolumen des Partikelfilters (4) einstellt.

9. Verfahren (100) nach Anspruch 8, wobei eine Hauptströmungsrichtung durch den Partikelfilter wenigstens im Wesentlichen der Strömungsrichtung im realen Betrieb der Brennkraftmaschine entspricht.

10. Verfahren (100) nach Anspruch 8 oder 9, wobei das Vorbeladungsmaterial vorkonditioniert, insbesondere getrocknet, temperiert und/oder gelockert wird, so dass dieses eine vordefinierte Feuchte, eine vordefinierte Temperatur und/oder die für die weitere Verarbeitung notwendige Konsistenz aufweist (101).

11. Verfahren (100) nach einem der Ansprüche 8 bis 10, wobei die Dispersion erzeugt wird, indem das Fluid die Partikel des Vorbeladungsmaterials aus einer abgelagerten Schicht 12, 12' der Partikel aufnimmt oder die Partikel dem Fluid zugemischt werden (102).

12. Verfahren (100) nach einem der Ansprüche 8 bis 11, wobei ein Vorbeladungszustand des Partikelfilters (4) durch Wiegen des Partikelfilters (4) und Vergleich mit der vor der Vorbeladung ermittelten Masse des Filters (4) oder durch Bestimmen eines Differenzdrucks des Partikelfilters (4) oder durch Bestimmen eines Massenstroms überprüft wird, wobei vorzugsweise eine Feuchte der Partikel des Vorbeladungsmaterials berücksichtigt wird (106a).

13. Verfahren (100) nach einem der Ansprüche 8 bis 12, wobei ein Vorbeladungszustand des Partikelfilters (4) durch Erfassen einer Konzentration des Vorbeladungsmaterials auf der Auslassseite des Filters, insbesondere hinter dem Auslass des Filters, überprüft wird (106b).

14. Verfahren (100) nach einem der Ansprüche 8 bis 13, wobei die Druckdifferenz im Laufe eines Ausbringens der Partikel erhöht wird (105), um einen steigenden Differenzdruck des Partikelfilters (4) mit zunehmender Vorbeladung des Partikelfilters (4) auszugleichen, insbesondere in der Weise, dass der Massenstrom des Fluids wenigstens im Wesentlichen konstant bleibt.

15. Verfahren (100) nach einem der Ansprüche 8 bis 14, wobei sich nach oder bei Abschluss des Ausbringens einer vordefinierten Menge, insbesondere Volumen, Masse oder Anzahl an Partikeln, ein Reinigungsprozess der Stirnfläche (13) an einer Einlassseite des Partikelfilters (4) anschließt (107), bei welchem dort abgelagertes Vorbeladungsmaterial entfernt wird.

16. Verfahren (100) nach einem der Ansprüche 8 bis 15, wobei zunächst der Massenstrom des Fluids durch den Filter (4) erzeugt wird und wobei, sobald dieser stabil ist, Partikel in das Fluid dispergiert werden.

17. Verfahren (100) nach einem der Ansprüche 8 bis 16, wobei nach oder bei Abschluss des Ausbringens einer vordefinierten Menge, insbesondere Volumen, Masse oder Anzahl an Partikeln oder eines Erreichens einer definierten Vorbeladung des Partikelfilters (4) keine Partikel mehr in das Fluid dispergiert werden und der Massenstrom, insbesondere nach einem Reinigungsprozess, über einen vordefinierten Zeitraum aufrecht erhalten wird.

18. Vorbeladener Partikelfilter (4), insbesondere vorbeladen mittels eines Verfahrens (100) gemäß einem der Ansprüche 8 bis 17, mit Kanälen, welche sich von einer Öffnung auf einer Stirnfläche (13) einer Einlassseite des Partikelfilters (4) in den Partikelfilter (4) hinein erstrecken und jeweils durch einen Boden, welcher der Öffnung gegenüberliegt, abgeschlossen werden, wobei die Kanäle, im Mittel oder alle, ausgehend vom Boden zu weniger als 1/10, insbesondere 1/20, der Länge der Kanäle von der Öffnung bis zum Boden, mit Vorbeladungsmaterial befüllt sind.
